# EUROPÄISCHE PATENTSCHRIFT

(11) **EP 0 931 362 B1**
(45) Veröffentlichungstag und Bekanntmachung des Hinweises auf die Patenterteilung: **23.05.2001**
(21) Anmeldenummer: 97909328.3
(22) Anmeldetag: 29.09.1997
(51) Int. Cl.: H01M 4/62, H01M 4/50, H01M 6/06

(54) **MODIFIZIERTES ELEKTRODENMATERIAL UND DESSEN VERWENDUNG**
MODIFIED ELECTRODE MATERIAL AND ITS USE
MATERIAU D'ELECTRODE MODIFIE ET SON UTILISATION

(30) Priorität: 10.10.1996 DE 19641970; 04.07.1997 DE 19728614
(43) Veröffentlichungstag der Anmeldung: 28.07.1999
(73) Patentinhaber: MERCK PATENT GmbH, 64293 Darmstadt (DE)
(72) Erfinder: HILARIUS, Volker, D-64823 Gross-Umstadt (DE); PFAFF, Gerhard, D-64839 Münster (DE); GLAUSCH, Ralf, D-64297 Darmstadt (DE); RAHNER, Dietmar, D-01217 Dresden (DE); PLIETH, Waldfried, D-01462 Ockerwitz (DE); KLOSS, Matthias, D-01129 Dresden (DE)
(86) Internationale Anmeldenummer: EP9705334
(87) Internationale Veröffentlichungsnummer: WO9815987

(56) Entgegenhaltungen:
- EP-A- 0 747 982
- WO-A-92/17910
- WO-A-97/13285
- FR-A- 2 418 965
- PATENT ABSTRACTS OF JAPAN vol. 006, no. 173 (E-129), 7.September 1982 & JP 57 090872 A (HITACHI MAXELL LTD), 5.Juni 1982,

## Beschreibung

Die Erfindung betrifft neue Mangandioxidelektroden, enthaltend modifiziertes, elektrochemisch aktives Mangandioxid, ein Verfahren zur Herstellung dieser neuen Mangandioxidelektroden, sowie deren Verwendung in primären elektrochemischen Zellen.

Typische Bestandteile einer alkalischen Primärzelle sind eine aus Mangandioxid bestehende Kathode, eine Anode, vorzugsweise aus Zink, ein alkalischer Elektrolyt und ein elektrolytdurchlässiges Separatormaterial.

Die Zinkelektrode besteht in der Regel aus großoberflächigem Zinkpulver und einem Gelierungsmittel, z. b. Carboxymethylcellulose, als Stabilisator. Bekannt sind aber auch kalt oder heiß mit oder ohne Bindemittel verpreßte oder gesinterte Zinkpulverelektroden. Neben amalgamierten werden vermehrt quecksilberfreie Zinkanoden eingesetzt.

Der alkalische Elektrolyt besteht meistens aus einer wäßrigen Kaliumhydroxidlösung. Es können aber auch Lösungen anderer Hydroxide, wie Natrium- oder Lithiumhydroxidlösungen sowie deren Mischungen sein.

Das zwischen den Elektroden befindliche Separatormaterial hat die Aufgabe, die beiden Elektroden elektronisch zu isolieren.

Als Kathodenmaterial wird häufig ein Elektrolytbraunstein, ein Mangandioxid mit y-Struktur, verwendet, welcher eine sehr hohe elektrochemische Aktivität besitzt. Zur Erhöhung der elektrischen Leitfähigkeit werden solchen Mangandioxidelektroden üblicherweise Kohle-, Ruß- oder Graphitpartikel zugesetzt. Als Bindemittel kommen organische oder anorganische Zusätze zum Einsatz.

In US-A-5 342 712 werden verlängerte Entladezeiten einer Zelle um 5 bis 15 % bei hohen und bei mittleren Entladeströmen durch Zusatz von Titandioxid mit Anatas-Struktur zur Aktivmasse der Mangandioxidkathode beschrieben. Gleichzeitig weisen entsprechende Zellen eine um etwa 60 mV erhöhte Zellspannung während der Entladung auf. Bei niedrigen Entladeströmen zeigt sich jedoch ein negativer Effekt. Erklärt wird die Wirkungsweise des Titandioxids dieser Struktur mit einer erhöhten lonenbeweglichkeit während der Entladung in diesem Material und einer damit verbundenen Verringerung der Polarisation, was wiederum zu einer längeren Entladezeit führt. Dieser Effekt wird durch Zusatz von Titandioxid mit Rutil-Struktur nach dieser Schrift nicht erzielt.

In US-A-5 532 085 wird der Zusatz von CaWO₄, MgTiO₃, BaTiO₃, CaTiO₃, ZnMn₂O₄ und Bi₁₂TiO₂₀ und Kombinationen dieser Oxide zur Mangandioxidkathode beschrieben. Unter verschiedenen Entladungsbedingungen wurden an Primärzellen durch diese Zusätze bis zu 10 % längere Entladezeiten gemessen.

Diese bekannten Verfahren, die begrenzte Entladezeit primärer elektrochemischer Zellen durch Titandioxidzusatz zu verlängern, weisen jedoch für die großtechnische Verwendung erhebliche Nachteile auf. Wie oben zu US-A-5 342 712 bereits gesagt, lassen sich gute Zellencharakteristiken durch Zusatz von Anatas-TiO₂ nur für hohe und mittlere Entladeströme erzielen. Bei niedrigen Entladeraten läßt sich dieser Effekt nicht nachweisen. Weiterhin sind die angegebenen Verbesserungen nur durch Verwendung hochreiner Titandioxidpartikel erzielbar. Auch sind die in US-A-5 532 085 beschriebenen verlängerten Entladezeiten nicht eindeutig nachvollziehbar.

Aufgabe der vorliegenden Erfindung war es nun, Mangandioxidelektroden zur Verfügung zu stellen, deren Verwendung in galvanischen Elementen, elektrochemischen Zellen, insbesondere in Primärzellen zu Produkten mit verbesserten Eigenschaften führt, insbesondere mit verlängerten Entladezeiten und erhöhten Zellspannungen während der Entladung und zwar sowohl bei hohen Entladeraten als auch bei niedrigen. Aufgabe war es auch, ein preiswertes, einfach durchführbares Verfahren zur Herstellung dieser modifizierten Mangandioxid-elektroden zur Verfügung zu stellen.

Die Lösung der Aufgabe erfolgt durch Mangandioxidelektroden, die anorganische Partikel gemäß den Ansprüchen 1 und 9 enthalten. Als einfache anorganische Partikel werden insbesondere Glimmerpartikel verwendet. Überraschenderweise wurde durch Versuche gefunden, daß durch Vermischen des üblicherweise als Kathodenmaterial verwendeten Mangandioxids mit im Handel erhältlichen Glimmerpartikeln ein Ausgangsmaterial zur Herstellung von Mangandioxid-Elektroden gewonnen wird, aus dem Kathoden mit erheblich verbesserten Eigenschaften hergestellt werden können.

Gegenstand der vorliegenden Erfindung ist daher auch eine Mangandioxidelektrode, welche Glimmer enthält.

Dabei können die allgemein bekannten und im Handel erhältlichen Glimmersorten verwendet werden. In einer besonders bevorzugten Ausführungsform dieser Erfindung wird der Glimmer in gemahlenenr Form, wobei Glimmerpartikel mit bestimmten Korngrößen vorliegen, eingesetzt. Vorzugsweise werden Glimmerpartikel mit einer Partikelgröße von 5 - 50 µm verwendet. Im Handel sind beispielsweise verschiedene Glimmer bestimmter Partikelgrößen erhältlich, wie beispielsweise der F-Glimmer (Merck KGaA, Darmstadt) mit einer Partikelgröße 5- 25 µm, der M-Glimmer (Merck KGaA, Darmstadt) mit einer Korngröße von < 15 um oder auch der N-Glimmer(Merck KGaA, Darmstadt) mit einr Partikelgröße von 10 - 50 µm. Selbstverständlich können aber auch Glimmer verwendet werden, die vorher nicht einer speziellen Behandlung unterzogen worden sind.

Bei den beschichteten Partikeln kann es sich um solche handeln, deren Trägerpartikel aus einem Material, ausgewählt aus der Gruppe Glimmer, SiO₂, Al₂O₃, ZrO₂ und ZnO, bestehen. Ein- oder mehrfache Beschichtungen dieser Partikel können aus dielektrischen und insbesondere aus ferro-, piezo- oder pyroelektrischen Substanzen aufgebaut sein. Solche Beschichtungen können bestehen aus Titanaten, Stannaten, Wolframaten, Niobaten oder Zirkonaten; daneben sind aber auch Silikatbeschichtungen möglich, je nach Art der ausgewählten Basispartikel. Partikel mit Beschichtungen aus Gemischen dieser Substanzen sind ebenfalls geeignet. Geeignete anorganische Partikel können auch Beschichtungen besitzen, bestehend aus Metalloxiden aus der Gruppe Fe₂O₃, NiO, CoO, ZrO₂, SnO₂,TiO₂, Sb₂O₃, PbO, Pb₃O₄ oder Bi₂O₃ und Mischungen aus diesen. Die an sich aus einer Substanz bestehenden einzelnen Beschichtungen können durch Fremdionen dotiert sein, wie beispielsweise durch Fremdionen dotierte SnO₂-Beschichtungen.

Das als Basismaterial verwendete Mangandioxid kann in einer Kristallwasser-haltigen Struktur vorliegen.

Die Lösung der oben genannten Aufgabe erfolgt insbesondere durch Mangandioxidelektroden, welche beschichtete anorganische Partikel in einer Menge von 0,01 bis 20 Gew.-%, bezogen auf die in der Elektrode enthaltene Menge Mangandioxid , enthalten.

Die Herstellung der Mangandioxidelektroden erfolgt, indem
a) das Mangandioxidpulver mit einem anorganischen Pulver, bestehend aus einfachen oder ein- oder mehrfach beschichteten anorganischen Partikeln, homogenisiert,
b) das Gemisch gegebenenfalls mit einem organischen oder anorganischen Bindemittel und einem Leitzusatz (bevorzugt Gra hit) vermischt und
c) das erhaltene Produkt zu einer Elektrode konfektioniert wird.

Dieses Herstellungsverfahren ist ebenfalls Gegenstand der Erfindung.

Erfindungsgemäße Mangandioxidelektroden können zur Herstellung von galvanischen Elementen, elektrochemischen Zellen, von primären Batterien und hier insbesondere von Knopfzellbatterien verwendet werden.

Überraschenderweise wurde durch Versuche gefunden, daß durch Vermischen des üblicherweise als Kathodenmaterial verwendeten Mangandioxids mit im Handel erhältlichen anorganischen beschichteten Partikeln, sogenannten Perlglanzpigmenten, ein Ausgangsmaterial zur Herstellung von Mangandioxid-Elektroden gewonnen wird, aus dem Kathoden mit erheblich verbesserten Eigenschaften hergestellt werden können. Bei diesen Pigmenten handelt es sich um anorganische Partikel, welche mit den unterschiedlichsten Substanzen beschichtet sein können.

Die durchgeführten Versuche haben gezeigt, daß durch eine Zugabe von einfachen anorganischen Partikeln, wie z. b. Glimmer, oder anorganischen beschichteten Partikeln Kathoden mit verlängerten Entladezeiten erhalten werden, wenn dem Mangandioxid 0,01 bis 20 Gew.-% bezogen auf die Mangandioxidmenge, solcher anorganischer Partikel in Form von Glimmer oder von beschichtetem Glimmer-, SiO₂-, Al₂O₃-, ZrO₂- oder beschichteten ZnO-Partikeln beigemischt wird. Die jeweils hinzugefügte Menge ist abhängig von der beabsichtigten Verwendung der hergestellten Mangandioxidelektroden. Während bereits das Hinzufügen einer geringfügigen Menge von etwa 0,01 Gew.-% der oben genannten Partikel einen nennenswerten Effekt auf die Entladezeiten von handelsüblichen Batterien ausübt, können Zugaben von bis zu 20 Gew.-% zu Kathodenmaterialien von Knopfzellbatterien sinnvoll sein.

Durch die Modifizierung des Kathodenmaterials mit einfachen anorganischen Partikeln, wie Glimmer, wird eine deutliche Kapazitätserhöhung der elektrochemischen Zelle gegenüber handelsüblichen Zink/Manganoxid-Batterien, deren Kathoden nicht modifiziert sind, erzielt.
Insbesondere durch die Modifizierung mit anorganischen beschichteten Partikeln wird eine Kapazitätserhöhung der elektrochemischen Zelle von 10 bis 30 % gegenüber handelsüblichen Zink/Manganoxid-Batterien, deren Kathoden nicht modifiziert sind, erreicht. Eine Kapazitätserhöhung von 30 % ist insbesondere durch die Zugabe von 20 Gew.-% anorganischer beschichteter Partikel zum eingesetzten Mangandioxid zu erzielen.
Demnach kann es sinnvoll sein, die zugesetzte Partikelmenge je nach Art der Partikel und der Verwendung der Elektroden zu variieren.

Zur Modifizierung des zur Herstellung von Elektroden verwendeten Mangandioxids haben sich als einfache anorganische Partikel im Handel erhältliche Glimmerpartikel erwiesen, welche bereits oben beschrieben wurden.

Als besonders geeignet zur Modifizierung des zur Herstellung von Elektroden verwendeten Mangandioxids haben sich im Handel erhältliche, beschichtete anorganische Partikel mit Glimmer als Trägermaterial erwiesen. Solche Materialien sind :
- Glimmer beschichtet mit Titandioxid in Anatas- oder Rutil-Modifikation
- Glimmer beschichtet mit SiO₂ und/oder SnO₂ und/oder TiO₂,
- Glimmer beschichtet mit Erdalkalititananten, Alkalititanaten (Mg-, Ca-, Sr-, Ba-titanaten) und/oder Bleititanat
- Glimmer beschichtet mit Stannaten, Wolframaten, Niobaten, oder Zirkonaten
- Glimmer beschichtet mit Metalloxiden (Fe₂O₃, NiO, CoO, ZrO₂, SnO₂, Sb₂O₃, PbO, Pb304 oder Bi₂O₃.)
- Glimmer beschichtet mit ZrO₂
- Glimmer beschichtet mit Mischungen dieser Oxide und Titanate

Geeignet sind zur Modifizierung aber auch solche in gleicher Weise beschichteten, anorganischen Partikel, in denen SiO₂-, Al₂O₃-, ZrO₂- Partikel als Trägermaterial dienen. Gute Effekte werden mit Hilfe von partikelförmigen Materialien erzielt, deren Trägermaterialien an sich bereits polarisierbar sind, was aber nicht Voraussetzung ist, da auch mit Materialien, deren Trägerpartikel nicht diese Eigenschaften aufweisen, verbesserte Kapazitäten gemessen werden. Es hat sich jedoch als besonders vorteilhaft erwiesen, wenn die Beschichtungen aus dielektrischen, insbesondere aus ferro-, piezo- oder pyroelektrischen Substanzen bestehen, wie z. B. aus Titanaten, Stannaten, Zirkonaten, Wolframaten, Niobaten oder anderen.

Überraschenderweise wurde in Versuchen gefunden, daß die erfindungsgemäße Verwendung von Partikeln mit Titandioxidbeschichtungen im Gegensatz zu dem in US-A-5 342 712 zu einer erheblichen Kapazitätssteigerung der Versuchszelle führt, unabhängig davon, ob die Beschichtung eine Anatas- oder eine Rutilstruktur aufweist. Auch hat es sich gezeigt, daß das vorteilhafte Ergebnis erzielt wird, ohne daß hochreine Ausgangssubstanzen zur Modifizierung eingesetzt werden. Gleichermaßen gute Ergebnisse werden erzielt, wenn zur Modifizierung des Elektrodenmaterials Partikel verwendet werden, deren Oberflächen mit Metalloxiden aus der Gruppe Fe₂O₃, NiO, CoO, ZrO₂, SnO₂,TiO₂, Sb₂O₃, PbO, Pb₃O₄, Bi₂O₃, WO₃, NbO oder mit Gemischen dieser Metalloxide beschichtet sind. Überraschend gute Kapazitätssteigerungen werden durch Zusatz von Partikeln erzielt, deren Oberflächenbeschichtungen mit Fremdionen dotiert sind, wie z. B. SnO₂-Beschichtungen, dotiert mit Antimon.

Zur Herstellung des eigentlichen Kathodenmaterials wird das Mangandioxidpulver mit der gewünschten Menge partikelförmigen Pulvers vermischt und in dem Fachmann bekannter Weise homogenisiert. Das Homogenisieren kann durch Vermahlen in Kugelmühlen oder Attritoren erfolgen. Bewährt hat sich bei den durchgeführten Versuchen ein Vermahlen mit Kugelmühlen für die Dauer von etwa acht Stunden und länger. Das so homogenisierte Produkt kann anschließend mit weiteren Zusätzen vermischt werden, wie z. B. mit organischen oder anorganischen Bindemitteln und Leitfähigkeitszusätzen. Als organische Bindemittel können hinzugefügt werden PTFE, Latex u. a. dem Fachmann für diesen Zweck bekannte Bindemittel. Als anorganisches Bindemittel kann Portlandzement dienen. Besonders geeignet ist PTFE. Geeignete Leitfähigkeitszusätze sind Ruß, Graphit, Stahlwolle und andere leitfähige Fasern. Besonders gute Ergebnisse wurden erzielt durch Zugabe von Ruß und Graphit in einer Menge von 4 - 10, insbesondere von etwa 5 Gew.-% bezogen auf die Gesamtmenge.

Anschließend wird das mit allen Zusätzen vermischte Pulver in an sich bekannter Weise zu Elektroden konfektioniert. Dieses kann durch Verpressen mit sehr hohem Druck zwischen Drahtgeweben, bestehend aus einem inerten Material, wie z. B. Nickel, erfolgen. Gegebenenfalls kann sich hieran eine Behandlung bei erhöhter Temperatur, ein sogenanntes Tempern, anschließen.

So hergestellte Elektroden lassen sich in bekannter Weise zur Herstellung von primären galvanischen Zellen verwenden, in denen in Gegenwart eines alkalischen Elektrolyten üblicherweise eine Zinkelektrode als Gegenelektrode dient. Es sind aber auch andere Ausgestaltungen entsprechender galvanischer Zellen möglich. So kann durch verschiedene Zusätze, wie beispielsweise Gelierungsmittel, Silicagel oder andere, die Viskosität des an sich wäßrigen Elektrolyten erhöht werden. Zwischen den Elektroden kann ein geeignetes Polymergewebe oder -vlies als Trennmaterial angebracht sein und falls dieses notwendig sein sollte ein Abstandshalter eingefügt sein. Als Polymervlies können Materialien, bestehend aus PVA, Polypropylen oder anderen inerten Polymeren, dienen. Abstandshalter, wie sie aus im Handel erhältlichen Batterien bekannt sind, können eine gewellte Form besitzen und beispielsweise aus PVC bestehen.

Zu Versuchszwecken wurden aus den erfindungsgemäßen Mangandioxidgemischen Elektroden hergestellt, indem nach dem Vermahlen jeweils ein Leitfähigkeitszusatz und ein Bindemittel hinzugefügt wurde. Das so erhaltene Gemisch wurde zwischen zwei Nickeldrahtnetzen zu Kathoden verpreßt.

Im folgenden werden Beispiele zur Veranschaulichung und zum leichteren Verständnis der vorliegenden Erfindung gegeben, die an sich aber nicht zur Beschränkung der eigentlichen Erfindung dienen.

### Beispiele

### Beispiel 1

### Herstellung einer Vergleichselektrode

Zur Herstellung einer Mangandioxid-Elektrode werden 30 mg Mangandioxid (EMD-TRF^{*}), 150 mg Graphit (Lonza KS75) und 10 mg PTFE-Pulver im Mörser homogenisiert. Die erhaltene Pulvermischung wird zwischen zwei Nickelnetzen mit einem Druck von 30 kN/cm² zu einer Elektrodentablette von 16 mm Durchmesser und einer Dicke von 1.2 mm verpreßt. Zusammen mit einer Zink-Gegenelektrode wird diese Mangandioxidelektrode in eine Knopfzelle der Größe 2032 eingebaut. Als Separatoren dienen je eine Lage Propylenvlies FS 2123WI (Fa. Freudenberg) und Celgard 2500 (Fa. Hoechst). Zusätzlich wird ein PVC-Wellseparator als Abstandshalter verwendet. Als Elektrolyt dient KOH (9 mol/l). Die Entladung der Zelle erfolgt bei einer spezifischen Entladestromdichte von 20 mA/g MnO₂.

### Beispiel 2

In einer Kugelmühle werden 9,0 g Mangandioxid (EMD-TRF) und 1,0 g eines Glimmers, beschichtet mit Zinndioxid und Titandioxid, wobei letzteres in Rutilstruktur auskristallisiert ist, für die Dauer von acht Stunden miteinander vermahlen. Der so erhaltene modifizierte Braunstein wird in einem Entladeversuch getestet.

Zu diesem Zweck wird eine Depolarisatormischung hergestellt aus:
33,4 mg modifiziertes Mangandioxid
150 mg Graphit (Lonza KS75)
10 mg PTFE-Pulver

Diese Mischung wird im Mörser homogenisiert und zwischen zwei Nickelnetzen bei einem Preßdruck von 30 kN/cm² zu einer Elektrodentablette von 16 mm Durchmesser und ca. 1,2 mm Dicke verpreßt. Der Gesamtgehalt der positiven Elektrode an modifiziertem Glimmer beträgt 1,7 % bezogen auf die Masse. Diese Elektrode wird zusammen mit einer Zinkelektrode als Gegenelektrode in eine Knopfzelle der Größe 2032 eingesetzt. Als Separatoren dienen je eine Lage Propylenvlies FS 2123 (Fa. Freudenberg) und Celgard 2500 (Fa. Hoechst). Zusätzlich wird ein PVC-Wellseparator als Abstandshalter verwendet. Als Elektrolyt dient eine KOH-Lösung (9 mol/l).
Die spezifische Entladestromdichte beträgt 20 mA/g MnO₂.

### Beispiel 3

In einer Kugelmühle werden 9,0 g Mangandioxid (EMD-TRF) und 1,0 g Glimmer, welcher mehrfach beschichtet ist mit Titandioxid, Siliciumdioxid und Antimon-dotiertem Zinnoxid (Minatec ® 30 CM, Fa. Merck, Darmstadt), für die Dauer von 8 Stunden miteinander vermahlen. Das so erhaltene modifizierte Mangandioxid wird in einem Cyclisierungsversuch getestet.

Zu diesem Zweck wird eine Depolarisatormischung hergestellt aus:
33,4 mg modifiziertem Mangandioxid
150,0 mg Graphit (Lonza KS75)
10,0 mg PTFE-Pulver

Diese Mischung wird in einem Mörser homogenisiert und zwischen zwei Nickelnetzen bei einem Preßdruck von 30 kN/cm² zu einer Elektrodentablette von 16 mm Durchmesser und ca. 1,2 mm Dicke verpreßt. Der Gesamtgehalt der positiven Elektrode an modifiziertem Glimmer beträgt 1,7 % bezogen auf die Masse. Diese Elektrode wird zusammen mit einer Cadmiumelektrode als Gegenelektrode in eine Knopfzelle der Größe 2032 eingesetzt. Als Separatoren dienen je eine Lage Propylenvlies FS 2123WI (Fa. Freudenberg) und Celgard 2500 (Fa. Hoechst). Zusätzlich wird ein PVC-Wellseparator als Abstandshalter verwendet. Als Elektrolyt dient eine KOH-Lösung (9 mol/l).
Die spezifische Entladestromdichte beträgt 20 mA/g MnO₂.

### Beispiel 4

Analog Beispiel 2 jedoch wurde zur Modifizierung des Mangandioxids ein Glimmer, beschichtet mit Titandioxid in Anatasstruktur, verwendet.

**Tabelle 1:**

| Ergebnisse der Entladeversuche in Abhängigkeit von der Entladeschlußspannung | | | |
|---|---|---|---|
| Versuch Nr. | Entladezeit [h] | | |
| | 1.0V | 0.9V | 0.8V |
| 1 | 9.5 | 11.8 | 12.8 |
| 2 | 11.7 | 13.2 | 15.7 |
| 3 | 10.2 | 12.4 | 13.7 |
| 4 | 10.9 | 13.4 | 16.4 |

Durch Zusatz von Titandioxid-beschichteten Trägermaterialien zur Mangandioxid-Aktivmasse hat sich die Entladezeit gegenüber der Vergleichszelle in Abhängigkeit von der Entladeschlußspannung um 7 bis 23 % verlängert.

**Tabelle 2:**

| Entladeversuche mit einer Entladestromdichte von 100 mA/g MnO₂ | | | |
|---|---|---|---|
| Versuch Nr. | Entladezeit [h] | | |
| | 1.0 V | 0.9 V | 0.8 V |
| 1 | 2.03 | 2.14 | 2.24 |
| 2 | - | - | - |
| 3 | 2.07 | 2.20 | 2.24 |
| 4 | 2.10 | 2.24 | 3.05 |

### Beispiele 5 bis 7:

Hersgestellt wird eine alkalische Rundzelle nach einer Standardtechnologie, wie sie in der Massenproduktion dieser Batterien üblich ist.

Als Beispiel werden folgende Baugrößen ausgewählt: Baugröße "C" oder IEC LR14 und Baugröße"AA" oder IEC LR6. Für die Herstellung dieser Batterien werden verwendet:
- eine konventionelle quecksilberfreie Zinkelektrode als Anode (<50 ppm Hg) (Gel-Elektrode) hergestellt aus quecksilberfreiem Zinkpulver und Polyacrylat
- eine KOH Elektrolytlösung (7 bis 9 molar) mit produktionsüblichen Zusätzen,
- eine konventinelle elektrolytdurchlässige Separatormembran (gleiches Material wie in Beispiel 1)
- und eine Mangandioxidelektrode bestehend aus 90 % elektrolytisch hergestelltem Mangandioxid (EMD),8 %Graphitpulver und 2 % PTFE als Binder. Zur Herstellung dieser Elektrode werden die pulverförmigen Ausgangsmaterialien gemischt, granuliert und zu einem hohlzylindrischen Kathodenformkörper verpreßt. Dieser Formkörper wird zusammen mit den anderen Komponenten zu einer Zelle zusammengesetzt. Dabei betragen Abmessungen der Kathodenformkörper für Baugröße AA:
   Höhe 11 mm
   Wandstärke 2,2 mm
   Außendurchmesser 12,2 mm,
von denen 4 Formkörper in entsprechend dimensionierte vernickelten Stahlcontainer eingesetzt werden.

Zur Herstellung von Zellen der Baugröße "C" werden entsprechende Kathodenformkörper mit den Abmessungen:
Höhe 11 mm
Wandstärke 3,8 mm
Außendurchmesser 24 mm hergestellt, von denen 4 Formkörper pro Zelle eingebaut werden.

### Beispiel 5: (Referenz)

Die Zelle wird wie oben beschrieben, zusammengebaut.

### Beispiel 6:

Die Mangandioxidelektrode der Zelle enthält neben den bereits beschriebenen Bestandteilen zusätzlich noch a) 0,1 oder b) 0,2 oder c) 0,5 % eines mit Titandioxid in Anatasstruktur beschichteten GlimmerPulvers.

### Beispiel 7:

Die Mangandioxidelektrode enthält neben den im Beispiel 5 beschriebenen Komponenten noch a) 0,1 oder b) 0,2 oder c) 0,5 % eines mit SnO₂ und Titandioxid in Rutilmodifikation beschichteten Glimmerpulvers.

Die frisch hergestellten Zellen werden nach IEC und ANSI Standardbedingungen gemessen.

**Tabelle 3**

| **Beispiel Nr.** | **Zusatz** | **Bauform** | **Meßbedingungen** | **erreichte Batteriekapazität** |
|---|---|---|---|---|
| **5** | | **AA** | 3,9Ω kont. (0.75 V) | **1.77 Ah** |
| **6a** | 0.2 % Glimmer, beschichtet mit TiO₂ in Anatasstruktur | **AA** | 3,9Ω kont. (0.75 V) | **1.87 Ah** |
| **7a** | 0.2 % Glimmer, beschichtet mit TiO₂ in Rutilstruktur | **AA** | 3,9Ω kont. (0.75 V) | **1.80 Ah** |
| **5** | | **AA** | 1.8Ω 15s Puls (0,9 V) | **560 Pulse** |
| **6a'** | 0.2 % Glimmer, beschichtet mit TiO₂ in Anatasstruktur | **AA** | 1.8Ω 15s Puls (0,9 V) | **597 Pulse** |
| **7a'** | 0.2 % Glimmer, beschichtet mit TiO₂ in Rutilstruktur | **AA** | 1.8Ω 15s Puls (0,9 V) | **582 Pulse** |
| **5** | | **C** | 2Ω, kont. (0.9 V) | **8.30 Ah** |
| **6b** | 0.1 % Glimmer, beschichtet mit TiO₂ in Anatasstruktur | **C** | 2Ω, kont. (0.9 V) | **8.82 Ah** |
| **7b** | 0.1 % Glimmer, beschichtet mit TiO₂ in Rutilstruktur | **C** | 2Ω, kont. (0.9 V) | **8.66 Ah** |
| **5** | | **C** | 2Ω, kont. (0.9 V) | **8.30 Ah** |
| **6C** | 0.5 % Glimmer, beschichtet mit TiO₂ in Anatasstruktur | **C** | 2Ω, kont. (0.9 V) | **8.49 Ah** |
| **7c** | 0.5 % Glimmer, beschichtet mit TiO₂ in Rutilstruktur | **C** | 2Ω, kont. (0.9 V) | **8.45 Ah** |

### Beispiel 8

In einer Kugelmühle werden 9.9 g Mangandioxid (EMD-TRF) und 0.1 g Glimmer (F-Glimmer, Fa. Merck KGaA) für die Dauer von acht Stunden miteinander vermahlen. Der so erhaltene modifizierte Braunstein wird in einem Entladeversuch getestet.

Die dazu hergestellte Elektrodenmasse besteht aus 20 % Mangandioxid (EMD-TRF), 75 % Graphit (Lonza KS75) und 5 % Polytetrafluorethylen (PTFE). Die Komponenten werden im Mörser homogenisiert und das PTFE-Bindemittel als ca. 63 %-ige wäßrige Suspension zugesetzt. Die erhaltene feuchte Mischung wird so auf ein Nickelnetz von 1 cm² Fläche aufpastiert, daß eine etwa 0.5 mm dicke Elektrode erhalten wird. Der Entladeversuch erfolgt in einer Modellzelle mit Platin-Gegenelektrode und Hg/HgO/KOH (9 mol/l)-Bezugselektrode. Als Elektrolyt dient eine wäßrige Kaliumhydroxid-Lösung (9 mol/l). Die spezifische Entladestromdichte beträgt 4 mA/g MnO₂.

### Beispiel 9

Nach Herstellung einer MnO₂-Elektrode gemäß Beispiel 8 wird diese in einer Modellzelle mit einer spezifischen Entladestromdichte von 20 mA/g MnO₂ entladen.

### Beispiel 10

Nach Herstellung einer MnO₂-Elektrode gemäß Beispiel 1 wird diese, keine Additive enthaltende Elektrode, in einer Modellzelle mit einer spezifischen Entladestromdichte von 20 mA/g MnO₂ entladen.

### Beispiel 11

In einer Kugelmühle werden 9.5 g Mangandioxid (EMD-TRF) und 0.5 g Glimmer (F-Glimmer, Fa. Merck KGaA) für die Dauer von acht Stunden miteinander vermahlen. Der so erhaltene physikalisch modifizierte Braunstein wird in einem Entladeversuch getestet.

Die dazu hergestellte Depolarisatormischung besteht aus 30 mg modifiziertem Mangandioxid, 150 mg Lonza Graphit KS75 und 10 mg PTFE-Pulver. Diese Mischung wird im Mörser homogenisiert und zwischen zwei Nickelnetzen bei einem Preßdruck von 30 kN/cm² zu einer Elektrodentablette von 16 mm Durchmesser und ca. 1 mm Dikke verpreßt. Diese positive Elektrode wird zusammen mit einer Zinkelektrode als Gegenelektrode in eine Knopfzelle der Größe 2032 eingesetzt. Als Separatoren dienen je eine Lage Polypropylenvlies FS 2123WI (Fa. Freudenberg) und Celgard 2500 (Fa. Hoechst). Zusätzlich wird ein PVC-Wellseparator als Abstandshalter verwendet. Als Elektrolyt dient eine KOH-Lösung (9 mol/l).
Die spezifische Entladestromdichte beträgt 20 mA/g MnO₂.

### Beispiel 12

### (Vergleichsmessung)

Es wird eine Depolarisatormischung aus 30 mg Mangandioxid (EMD-TRF), 150 mg Lonza Graphit KS75 und 10 mg PTFE-Pulver hergestellt. Diese Mischung wird im Mörser homogenisiert und zwischen zwei Nickelnetzen bei einem Preßdruck von 30 kN/cm² zu einer Elektrodentablette von 16 mm Durchmesser und ca. 1 mm Dicke verpreßt. Diese positive Elektrode wird zusammen mit einer Zinkelektrode als Gegenelektrode in eine Knopfzelle der Größe 2032 eingesetzt. Als Separatoren dienen je eine Lage Polypropylenvlies FS 2123Wl (Fa. Freudenberg) und Celgard 2500 (Fa. Hoechst). Zusätzlich wird ein PVC-Wellseparator als Abstandshalter verwendet. Als Elektrolyt dient eine KOH-Lösung (9 mol/l).
Die spezifische Entladestromdichte beträgt 20 mA/g MnO₂.

In den folgenden Abbildungen sind die Ergebnisse der Entladeversuche dargestellt.

### Abbildung 1

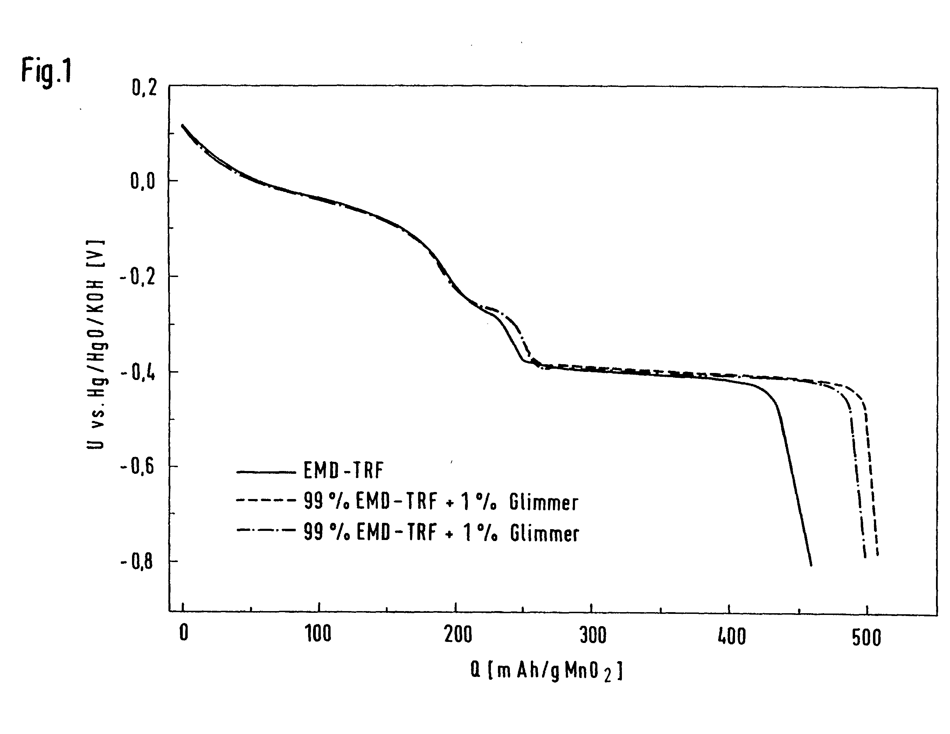

Abbildung 1 zeigt das Entladeverhalten von zwei Elektroden, die gemäß Beispiel 8 hergestellt wurden, und einer Vergleichselektrode ohne Additiv gemäß Beispiel 1. Es ist jeweils das Elektrodenpotential über der entnommenen Ladungsmenge dargestellt. Die Entladung erfolgte mit einer spezifischen Stromdichte von 4 mA/g MnO₂.

### Abbildung 2

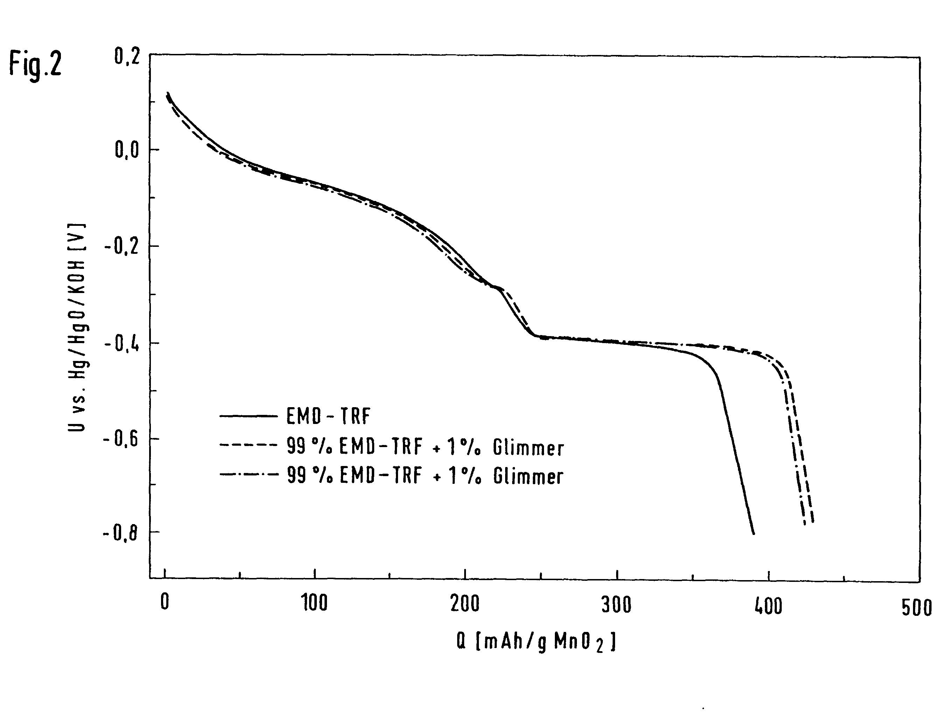

Abbildung 2 zeigt das Entladeverhalten von zwei Elektroden, die gemäß Beispiel 9 hergestellt wurden, und einer Vergleichselektrode ohne Additiv gemäß Beispiel 10. Dargestellt ist jeweils das Elektrodenpotential über der entnommenen Ladungsmenge. Die Entladung erfolgte mit einer spezifischen Stromdichte von 20 mA/g MnO₂.

### Abbildung 3

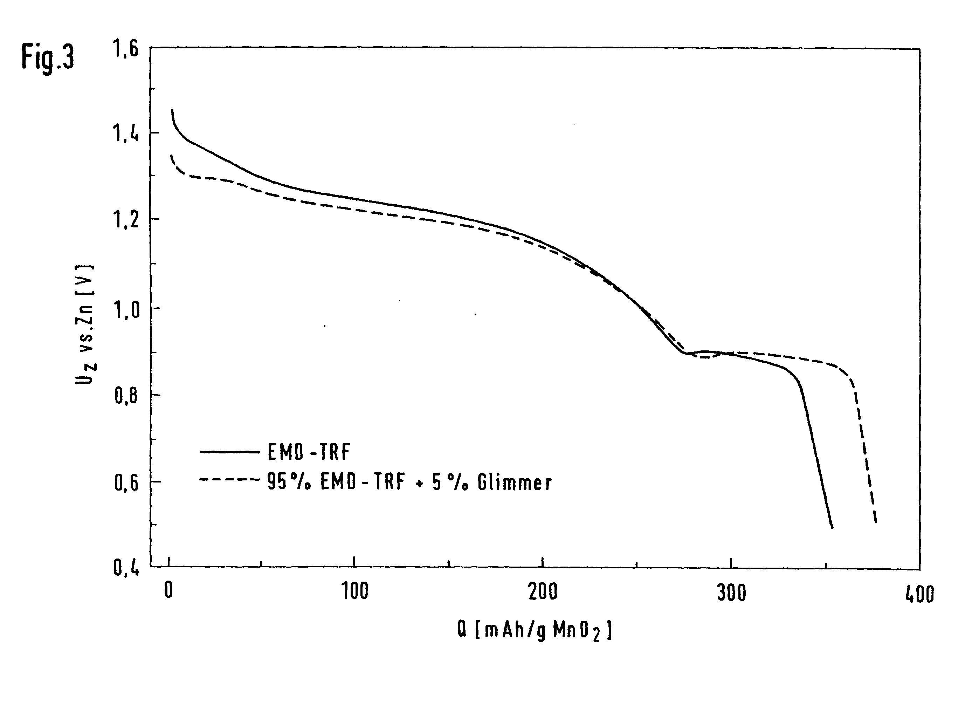

Abbildung 3 zeigt das Entladeverhalten von einer gemäß Beispiel 11 hergestellten Elektrode und einer Vergleichselektrode gemäß Beispiel 12. Dargestellt ist die Zellspannung über der entnommenen Ladungsmenge. Die Entladung erfolgte mit einer spezifischen Stromdichte von 20 mA/g MnO₂.

## Patentansprüche

1. Mangandioxidelektrode, enthaltend ein- oder mehrfach beschichtete anorganische Partikel.

2. Mangandioxidelektrode nach Anspruch 1, dadurch gekennzeichnet, daß die enthaltenen Partikel Glimmer- oder ZrO₂-Partikel sind.

3. Mangandioxidelektrode nach Anspruch 1 oder 2, dadurch gekennzeichnet, daß besagte Beschichtungen aus dielektrischen Substanzen bestehen.

4. Mangandioxidelektrode nach Anspruch 3, dadurch gekennzeichnet, daß besagte Beschichtungen ferro-, piezo- oder pyroelektrisch sind.

5. Mangandioxidelektrode nach einem der Ansprüche 1 bis 4,
dadurch gekennzeichnet, daß besagte Beschichtungen, ausgewählt sind aus der Gruppe
(i) der Titanate, Stannate, Zirkonate, Wolframate, Niobate, Silikate oder aus deren Mischungen, und
(ii) Fe₂O₃, NiO, CoO, ZrO₂, SnO₂,TiO₂, Sb₂O₃, PbO, Pb₃O₄, Bi₂O₃, WO₃, NbO oder deren Mischungen,
mit der Maßgabe, daß im Fall von mehrfachen Beschichtungen die einzelnen Schichten gleich oder unterschiedlich sein können.

6. Mangandioxidelektrode nach Anspruch 5, dadurch gekennzeichnet, daß mindestens eine der besagten Beschichtungen aus Titandioxid in Anatas- oder Rutil-Modifikation besteht.

7. Mangandioxidelektrode gemäß einem der Ansprüche 1 und 6, dadurch gekennzeichnet, daß besagte Beschichtungen durch Fremdionen dotiert sind.

8. Mangandioxidelektrode nach Anspruch 7, dadurch gekennzeichnet, daß mindestens eine der besagten Beschichtungen aus Zinndioxid, das mit Antimon dotiert ist, besteht.

9. Mangandioxidelektrode, enthaltend unbeschichtete anorganische Partikel, ausgewählt aus der Gruppe Glimmer und ZrO₂.

10. Mangandioxidelektrode gemäß einem oder mehreren der Ansprüche 1 bis 9,
dadurch gekennzeichnet, daß das darin enthaltene Mangandioxid in einer Kristallwasser-haltigen Struktur vorliegt.

11. Mangandioxidelektrode gemäß einem oder mehreren der Ansprüche 1 bis 10, enthaltend 0,01 bis 20 Gew.-% anorganischer beschichteter oder unbeschichter Partikel bezogen auf die enthaltene Mangandioxidmenge.

12. Verfahren zur Herstellung von Mangandioxidelektroden gemäß einem oder mehreren der Ansprüche 1 bis 11, dadurch gekennzeichnet, daß
(i) das Mangandioxidpulver mit einem Pulver, bestehend aus ein- oder mehrfach beschichteten oder unbeschichteten anorganischen Partikeln, homogenisiert,
(ii) das Gemisch gegebenenfalls mit einem organischen oder anorganischen Bindemittel und einem Leitzusatz vermischt und
(iii) das erhaltene Produkt zu einer Elektrode konfektioniert wird.

13. Verfahren gemäß Anspruch 12, dadurch gekennzeichnet, daß die Homogenisierung der besagten Stoffe durch Vermahlen erfolgt.

14. Verfahren gemäß Anspruch 13, dadurch gekennzeichnet, daß besagtes homogenisierte Pulvergemisch durch Verpressen, gegebenenfalls zwischen zwei Trägermaterialien, sowie gegebenenfalls durch Tempern zu einer Elektrode konfektioniert wird.

15. Elektrochemische Zelle, enthaltend eine Mangandioxidelektrode gemäß einem der Ansprüche 1 bis 11.

16. Elektrochemische Zelle nach Anspruch 15, enthaltend im wesentlichen eine besagte Mangandioxidelektrode als Kathode, eine Zinkelektrode als Anode und einen wäßrigen alkalischen Elektrolyten.

17. Verwendung von Mangandioxidelektroden gemäß einem oder mehreren der Ansprüche 1 bis 11 zur Herstellung von prismatischen Zellen, Rundzellen und Knopfbatterien.

## Claims

1. Manganese dioxide electrode comprising singly or multiply coated inorganic particles.

2. Manganese dioxide electrode according to Claim 1, characterized in that the comprised particles are mica or ZrO₂ particles.

3. Manganese dioxide electrode according to Claim 1 or 2, characterized in that said coatings consist of dielectric substances.

4. Manganese dioxide electrode according to Claim 3, characterized in that said coatings are ferroelectric, piezoelectric or pyroelectric.

5. Manganese dioxide electrode according to one of Claims 1 to 4, characterized in that said coatings are selected from the group consisting of
(i) titanates, stannates, zirconates, tungstates, niobates, silicates or of mixtures thereof, and
(ii) Fe₂O₃, NiO, CoO, ZrO₂, SnO₂, TiO₂, Sb₂O₃, PbO, Pb₃O₄, Bi₂O₃, WO₃, NbO or mixtures thereof,
with the proviso that in the case of multiple coatings, the individual layers can be identical or different.

6. Manganese dioxide electrode according to Claim 5, characterized in that at least one of the said coatings consists of titanium dioxide with anatase or rutile modification.

7. Manganese dioxide electrode according to one of Claims 1 to 6, characterized in that said coatings may be doped with foreign ions.

8. Manganese dioxide electrode according to Claim 7, characterized in that at least one of the said coatings consists of tin dioxide which is doped with antimony.

9. Manganese dioxide electrodes comprising uncoated inorganic particles selected from the group consisting of mica and ZrO₂.

10. Manganese dioxide electrode according to one or more of Claims 1 to 9, characterized in that the manganese dioxide comprised therein is present in a structure comprising water of crystallization.

11. Manganese dioxide electrode according to one or more of Claims 1 to 10, comprising 0.01 to 20% by weight of inorganic coated or uncoated particles, relative to the amount of manganese dioxide comprised.

12. Process for producing manganese dioxide electrodes according to one or more of Claims 1 to 11, characterized in that
(i) the manganese dioxide powder is homogenized with a powder consisting of singly or multiply coated or uncoated inorganic particles,
(ii) the mixture is optionally blended with an organic or inorganic binder and a conduction additive and
(iii) the product obtained is manufactured to an electrode.

13. Process according to Claim 12, characterized in that the said substances are homogenized by grinding.

14. Process according to Claim 13, characterized in that said homogenized powder mixture is made into an electrode by pressing, optionally between two support materials, and also optionally by annealing.

15. Electrochemical cell comprising a manganese dioxide electrode according to one of Claims 1 to 11.

16. Electrochemical cell according to Claim 15 essentially comprising a said manganese dioxide electrode as cathode, a zinc electrode as anode and an aqueous alkaline electrolyte.

17. Use of manganese dioxide electrodes according to one or more of Claims 1 to 11 for producing prismatic cells, round cells and button-cell batteries.

## Revendications

1. Électrode en bioxyde de manganèse contenant des particules inorganiques munies d'un ou plusieurs revêtements.

2. Électrode en bioxyde de manganèse selon la revendication 1, caractérisée en ce que les particules contenues sont des particules de mica ou des particules de ZrO₂.

3. Électrode en bioxyde de manganèse selon la revendication 1 ou 2, caractérisée en ce que lesdits revêtements sont constitués de substances diélectriques.

4. Électrode en bioxyde de manganèse selon la revendication 3, caractérisée en ce que lesdits revêtements sont ferro-, piézo- ou pyroélectriques.

5. Électrode en bioxyde de manganèse selon l'une des revendications 1 à 4, caractérisée en ce que lesdits revêtements sont choisis dans le groupe constitué par :
(i) les titanates, stannates, zirconates, tungstates, niobates, silicates ou leurs mélanges, et
(ii) Fe₂O₃, NiO, CoO, ZrO₂, SnO₂, TiO₂, Sb₂O₃, PbO, Pb₃O₄, Bi₂O₃, WO₃, NbO ou leurs mélanges,
sous réserve que dans le cas des revêtements multiples les couches peuvent être identiques ou différentes.

6. Électrode en bioxyde de manganèse selon la revendication 5, caractérisée en ce qu'au moins l'un desdits revêtements est constitué de bioxyde de titane sous la forme anatase ou rutile.

7. Électrode en bioxyde de manganèse selon l'une des revendications 1 et 6, caractérisée en ce que lesdits revêtements sont dopés par des ions étrangers.

8. Électrode en bioxyde de manganèse selon la revendication 7, caractérisée en ce qu'au moins l'un desdits revêtements est constitué de dioxyde d'étain dopé avec de l'antimoine.

9. Électrode en bioxyde de manganèse contenant des particules inorganiques non revêtues choisies dans le groupe constitué par le mica et ZrO₂.

10. Électrode en bioxyde de manganèse selon l'une des revendications 1 à 9, caractérisée en ce que le bioxyde de manganèse contenu dans ladite électrode se présente dans une structure contenant l'eau de cristallisation.

11. Électrode en bioxyde de manganèse selon l'une ou plusieurs des revendications 1 à 10, contenant 0,01 à 20% en poids de particules inorganiques revêtues ou non, rapporté à la quantité de bioxyde de manganèse contenue.

12. Procédé pour la préparation des électrodes en bioxyde de manganèse selon l'une ou plusieurs des revendications 1 à 11, caractérisé :
(i) en ce que l'on homogénéise une poudre de bioxyde de manganèse avec une poudre constituée de particules inorganiques comportant un ou plusieurs revêtements ou de poudres non revêtues,
(ii) en ce que l'on malaxe le mélange éventuellement avec un liant organique ou inorganique et un additif conducteur, et
(iii) en ce que l'on façonne le produit obtenu pour former une électrode.

13. Procédé selon la revendication 12, caractérisé en ce que l'homogénéisation desdites substances s'effectue par broyage.

14. Procédé selon la revendication 13, caractérisé en ce que ledit mélange de poudres homogénéisé est mis sous forme d'électrode par compression, éventuellement entre deux supports, ainsi qu'éventuellement par recuit.

15. Cellule électrochimique contenant une électrode en bioxyde de manganèse selon l'une des revendications 1 à 11.

16. Cellule électrochimique selon la revendication 15, contenant essentiellement ladite électrode en bioxyde de manganèse comme cathode, une électrode en zinc comme anode et un électrolyte aqueux alcalin.

17. Utilisation des électrodes en bioxyde de manganèse selon l'une ou plusieurs des revendications 1 à 11 pour la fabrication de cellules prismatiques, de piles rondes et de batteries rondes.
